# EUROPÄISCHE PATENTANMELDUNG

(11) **EP 3 487 026 A1**
(43) Veröffentlichungstag der Anmeldung: **22.05.2019**
(21) Anmeldenummer: 18205061.7
(22) Anmeldetag: 08.11.2018
(51) Int. Cl.: H02J 3/16, H02J 3/18, H02J 3/32, H02J 7/00, H02M 7/797, H02H 3/05, H02H 7/18, H01M 10/48

(54) **UMRICHTERANORDNUNG ZUM STABILISIEREN EINES WECHSELSPANNUNGSNETZES**

(30) Priorität: 17.11.2017 DE 102017220599
(71) Anmelder: Siemens Aktiengesellschaft, 80333 München (DE)
(72) Erfinder: Spahic, Ervin, 91052 Erlangen (DE)

(57) **Zusammenfassung**

Die Erfindung betrifft eine Umrichteranordnung (1) mit einem Umrichter (2) mit einer Wechselspannungsseite (3) zum Verbinden mit einem Wechselspannungsnetz (4), einer Gleichspannungsseite (5), einer Speicheranordnung, die mit der Gleichspannungsseite des Umrichters verbindbar ist, wobei die Speicheranordnung (6) eine Mehrzahl elektrisch in Reihe miteinander verbundener Speichermodule umfasst. Die Erfindung zeichnet sich dadurch aus, dass eine vorgegebene Anzahl benachbarter Speichermodule eine Speichereinheit (11E1-m) bildet, wobei in einer Parallelschaltung zur Speichereinheit ein Schutzschalter (12S1-m) vorgesehen ist, mittels dessen die Speichereinheit im Fehlerfall überbrückbar ist.

## Beschreibung

Die Erfindung betrifft eine Umrichteranordnung mit einem Umrichter mit einer Wechselspannungsseite zum Verbinden mit einem Wechselspannungsnetz, einer Gleichspannungsseite sowie mit einer Speicheranordnung, die mit der Gleichspannungsseite des Umrichters verbindbar ist, wobei die Speicheranordnung eine Mehrzahl elektrisch in Reihe miteinander verbundener Speichermodule umfasst.

Eine solche Umrichteranordnung ist aus der WO 2007/102758 A1 bekannt. Dort ist eine Leistungskompensationsanlage beschrieben, die sowohl Blindleistung als auch Wirkleistung mit dem Wechselspannungsnetz austauschen kann. Die bekannte Leistungskompensationsanlage umfasst einen Umrichter, der auch als STATCOM (Static Var Compensator) bezeichnet wird, der wechselspannungsseitig über einen Transformator mit dem Wechselspannungsnetz verbunden ist. In einer Parallelschaltung zu der Gleichspannungsseite des Umrichters ist eine Kapazität angeordnet. Die Leistungskompensationsanlage umfasst ferner eine Speicheranordnung in Form von Batterien, die in einer Reihenschaltung parallel zur Kapazität angeordnet sind. Durch den Austausch von Blind- und Wirkleistung mit dem Wechselspannungsnetz kann die bekannte Umrichteranordnung besonders wirksame Stabilisierung des Wechselspannungsnetzes sorgen.

Die Aufgabe der Erfindung ist es, eine artgemäße Umrichteranordnung bereitzustellen, die möglichst zuverlässig ist.

Die Aufgabe wird erfindungsgemäß dadurch gelöst, dass eine vorgegebene Anzahl benachbarter Speichermodule eine Speichereinheit bildet, wobei in einer Parallelschaltung zur Speichereinheit ein Schutzschalter vorgesehen ist, mittels dessen die Speichereinheit im Fehlerfall überbrückbar ist.

Die Speichermodule der Speicheranordnung sind demnach zu einer oder mehreren Speichereinheiten zusammengefasst. Jeder der Speichereinheiten ist ein Schutzschalter zugeordnet, der in einer Parallelschaltung zu der zugeordneten Speichereinheit angeordnet ist und diese überbrücken kann. Die Speichermodule können beispielsweise dem Fachmann an sich bekannte Supercaps, Batterien, LiCaps oder dergleichen umfassen.

Ein Vorteil der erfindungsgemäßen Umrichteranordnung ist die Möglichkeit einer zuverlässigen Speicherung größerer Energiemengen. Um größere Leistungen und Energien zu erreichen werden nämlich viele Speichermodule in Serie geschaltet. Die in Serie geschalteten Speichermodule sind üblicherweise im Niederspannungsbereich (50 - 150 Vdc). Bei der Serienschaltung werden dann Spannungen im Mittelspannungsbereich erreicht (oberhalb von 1 kVdc). In einem Fehlerfall könnten sich dadurch sehr große Energien entladen, so dass große Ströme durch die Speicheranordnung fließen. Durch die Möglichkeit der Überbrückung von fehlerhaften Speichereinheiten kann ein Ausfall oder zu einem partiellen Leistungsausfall der Umrichteranordnung aufgrund der hohen Ströme durch die Speicheranordnung verhindert werden. Ein Weiterbetrieb der Speicheranordnung bzw. der Umrichteranordnung in einem solchen Fehlerfall ist damit ermöglicht. Zugleich werden hohe Kosten vermieden, die entstehen würden, wenn jedes einzelne Speichermodul mit einem eigenen Überbrückungsschalter ausgestattet würde.

Vorzugsweise ist der Schutzschalter auf eine Spannung von mindestens 1 kVdc ausgelegt. Der Schutzschalter ist demnach ein Gleichspannungsleistungsschalter, der eine Spannungsfestigkeit von über 1 kVdc aufweist. Auf diese Weise kann der Schutzschalter eine größere Anzahl von Speichermodulen überbrücken, so dass die Anzahl der verwendeten Schutzschalter entsprechend reduziert werden kann.

Der Schutzschalter kann beispielsweise ein leistungselektronischer Schalter, ein mechanischer Gleichspannungsleistungsschalter oder ein Hybridschalter sein. Der Leistungselektronische Schalter umfasst dabei abschaltbare Leistungshalbleiter, wie beispielsweise IGBT-Schalter. Leistungselektronische Schalter sind besonders schnell schaltbar. Der mechanische Gleichspannungsleistungsschalter kann eine zweckmäßig ausgelegte Vakuumschaltröhre sein. Mechanische Schalter sind besonders kostengünstige Schalter. Der Hybridschalter umfasst sowohl Halbleiterschalter als auch mechanische Schalter, die in Reihe und/oder parallel zu dem wenigstens einem Halbleiterschalter angeordnet sind.

Gemäß einer Ausführungsform der Erfindung ist eine Überwachungseinrichtung zur Überwachung der Speichereinheit vorgesehen. Die Überwachungseinrichtung umfasst ferner eine Steuerungseinheit. Die Speichermodule sind dazu eingerichtet, den Speichermodulen der Speichereinheit zugeordnete Zustandsmesswerte zu erzeugen und an die Steuerungseinheit zu übermitteln. Zugleich ist die Steuerungseinheit dazu eingerichtet, unter Verwendung der Zustandsmesswerte ein Vorliegen einer vorbestimmten Fehlerbedingung zu erkennen und den Schutzschalter derart anzusteuern, dass mittels des Schutzschalters die Speichereinheit überbrückt wird. Demnach werden die Speichermodule überwacht, indem ihre Zustandsmesswerte gemessen werden. Die Zustandsmesswerte können beispielsweise Spannung am Speichermodul, Strom durch das Speichermodul, dessen Kapazität und/oder dessen Temperatur sein. Entsprechende Messvorrichtungen zur Ermittlung der Zustandsmesswerte sind gemäß dieser Ausführungsform geeigneterweise in die Speichermodule integriert. Die Zustandsmesswerte werden an die Steuerungseinheit übermittelt und dort weiter bearbeitet. Im Fehlerfall kann die Steuerungseinheit den zuständigen Schutzschalter ansteuern, so dass der die fehlerhafte Speichereinheit überbrückende Parallelzweig geschlossen wird.

Gemäß einer weiteren Ausführungsform der Erfindung ist eine Überwachungseinrichtung zur Überwachung der Speichereinheit vorgesehen, wobei die Überwachungseinrichtung eine Steuerungseinheit umfasst, die Überwachungseinrichtung ferner wenigstens eine Überwachungseinheit umfasst, die dazu eingerichtet ist, an den Speichermodulen der Speichereinheit erzeugte Zustandsmesswerte an die Steuerungseinheit zu übermitteln, und die Steuerungseinheit dazu eingerichtet ist, unter Verwendung der Zustandsmesswerte ein Vorliegen einer vorbestimmten Fehlerbedingung zu erkennen und den Schutzschalter derart anzusteuern, dass mittels des Schutzschalters die Speichereinheit überbrückt wird. Gemäß dieser Ausführungsform werden die Zustandsmesswerte zunächst an die Überwachungseinheit übermittelt. Die Überwachungseinheit kann die Zustandsmesswerte weiter bearbeiten und leitet diese an die zentrale Steuereinheit weiter.

Bevorzugt umfasst der Umrichter eine Mehrzahl von Umrichterarmen, die jeweils eine Reihenschaltung von Halbleiterschaltmodulen aufweisen. Die Umrichterarme erstrecken sich geeigneterweise zwischen einem Wechselspannungsanschluss des Umrichters und einem Gleichspannungspol auf der Gleichspannungsseite des Umrichters. Die Umrichterarme können auch zum Beispiel in einer Doppelstern oder einer Dreieckschaltung miteinander verschaltet sein. Zweckmäßigerweise umfassen die Halbleiterschaltmodule Zwischenkondensatoren, die auch als Zwischenkreiskondensatoren bezeichnet werden können. Auf diese Weise ist die Umrichteranordnung zu einer Blindleistungskompensation im Wechselspannungsnetz ertüchtigt. Die Zwischenkondensatoren der Halbleiterschaltmodule sind nicht dazu vorgesehen, Wirkleistung zwischen der Umrichteranordnung und dem Wechselspannungsnetz auszutauschen.

Gemäß einer Ausführungsform der Erfindung umfassen die Halbleiterschaltmodule jeweils Halbleiterschalter sowie einen Zwischenkondensator, die miteinander in einer Vollbrückenmodulschaltung verbunden sind. Eine Vollbrückenmodulschaltung zeichnet sich dadurch aus, dass zwei Reihenschaltungen von zwei Halbleiterschaltern parallel geschaltet sind, wobei parallel zu den Reihenschaltungen der Halbleiterschalter der Zwischenkondensator angeordnet ist. Die Vollbrückenmodulschaltung weist zwei Anschlussklemmen auf, wovon eine mit einem Potenzialpunkt zwischen den Halbleiterschaltern der einen Reihenschaltung und die andere mit einem Potenzialpunkt zwischen den Halbleiterschaltern der anderen Reihenschaltung angeordnet ist. An den an Anschlussklemmen des Halbleiterschaltmoduls eine an dem Zwischenkondensator abfallende Kondensatorspannung, eine Nullspannung oder aber die inverse Kondensatorspannung erzeugbar ist.

Zweckmäßigerweise ist die Umrichteranordnung dazu eingerichtet, durch geeignete Ansteuerung der Halbleiterschaltmodule mittels einer Regelungseinrichtung eine Wirkleistung zwischen der Speicheranordnung und einem an die Umrichteranordnung wechselspannungsseitig angeschlossenen Wechselspannungsnetz auszutauschen. Damit ist die Umrichteranordnung dazu geeignet, beispielsweise zu einer Frequenzstabilisierung im Wechselspannungsnetz beizutragen.

Geeigneterweise ist die Umrichteranordnung ferner dazu eingerichtet, durch geeignete Ansteuerung der Halbleiterschaltmodule mittels einer Regelungseinrichtung eine Blindleistung zwischen den Halbleiterschaltmodulen und einem an die Umrichteranordnung wechselspannungsseitig angeschlossenen Wechselspannungsnetz auszutauschen. Die Umrichteranordnung kann damit dazu verwendet werden, das Wechselspannungsnetz durch eine Blindleistungskompensation weiter zu stabilisieren.

Mit der Reihenschaltung der Halbleiterschaltmodule ist der Umrichter ein sogenannter modularer Mehrstufenumrichter (MMC). Die Halbleiterschalter der Halbleiterschaltmodule des MMC sind voneinander unabhängig ansteuerbar, wodurch der MMC eine stufenförmige Wechselspannung mit einem nahezu beliebigen zeitlichen Verlauf generieren kann. Gemäß einer Ausführungsform der Erfindung sind die Umrichterarme des Umrichters in einer Doppelsternanordnung miteinander verbunden. Die Doppelsternanordnung ist durch den folgenden Aufbau gekennzeichnet. Der Umrichter umfasst drei Umrichterphasen mit jeweils zwei Umrichterarmen. Jede Umrichterphase erstreckt sich zwischen einem positiven und einem negativen Gleichspannungspol der Umrichteranordnung, die zugleich mit der ersten beziehungsweise positiven und der zweiten beziehungsweise negativen Gleichspannungssammelschiene verbunden sind. Die Umrichterarme einer einzelnen Umrichterphase sind in Reihe miteinander verbunden, wobei zwischen den Umrichterarmen jeweils ein Wechselspannungsanschluss zum Verbinden des Umrichters mit einer zugeordneten Phase des Wechselspannungsnetzes angeordnet ist. Die Speicheranordnung ist parallel zu den Umrichterphasen zwischen dem positiven und dem negativen Gleichspannungspol geschaltet.

Vorzugsweise ist an den einzelnen Speichermodulen eine Gleichspannung von 25 bis 200 Vdc, bevorzugt 50 bis 150 Vdc erzeugbar. An der Speichereinheit ist vorzugsweise eine Spannung von mehr als 1 kVdc erzeugbar.

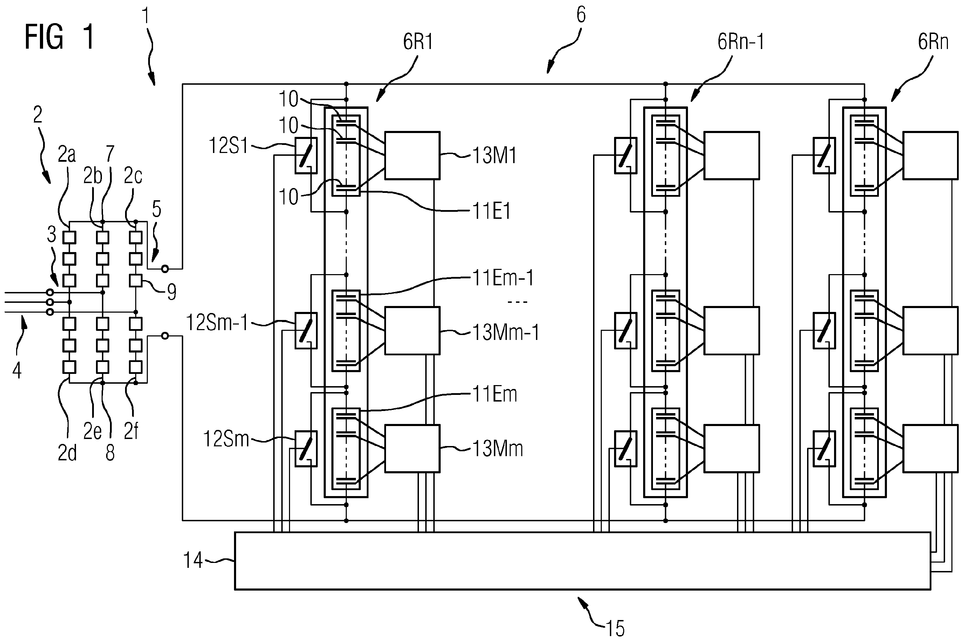

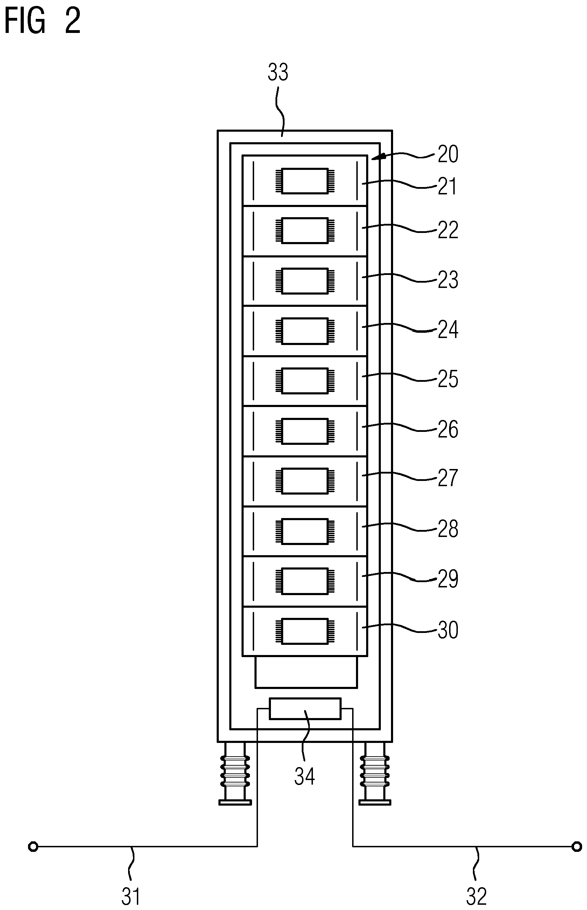

Die Erfindung wird im Folgenden anhand der Figuren 1 und 2 weiter erläutert.
Figur 1 zeigt ein erstes Ausführungsbeispiel einer erfindungsgemäßen Umrichteranordnung in einer schematischen Darstellung;
Figur 2 zeigt ein Beispiel einer Speichereinheit für die erfindungsgemäße Umrichteranordnung in einer schematischen Darstellung;
Figur 3 zeigt ein Beispiel eines Halbleiterschaltmoduls in einer schematischen Darstellung.

In Figur 1 ist eine Umrichteranordnung 1 gezeigt. Die Umrichteranordnung 1 umfasst einen Umrichter 2 mit einer Wechselspannungsseite 3 zum Verbinden mit einem Wechselspannungsnetz 4 und mit einer Gleichspannungsseite 5. Der Umrichter 2 ist gleichspannungsseitig mit einer Speicheranordnung 6 verbunden.

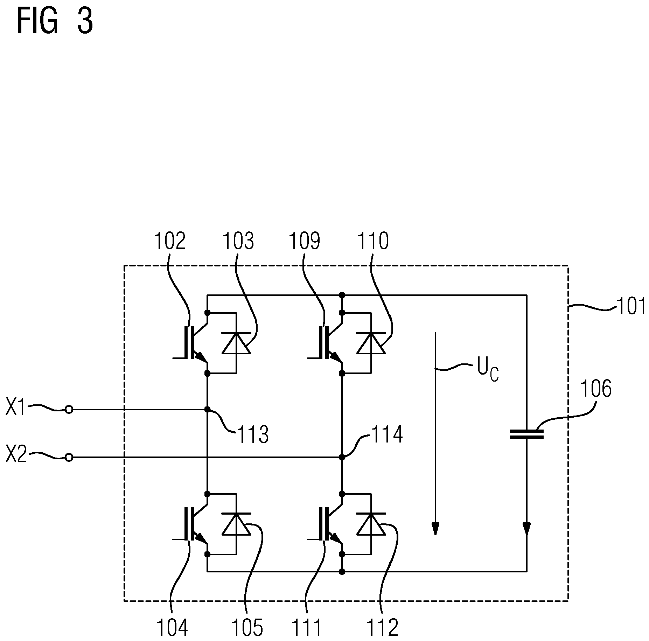

Der Umrichter umfasst sechs Umrichterarme 2a-2f, die in einer Doppelsternschaltung miteinander verbunden sind. Die drei Umrichterarme 2a-2c sind in einem ersten Sternpunkt 7, die Umrichterarme 2d-2f in einem zweiten Sternpunkt 8 miteinander verbunden. Jeder Umrichterarm 2a-2f weist eine Reihenschaltung von (im Ausführungsbeispiel der Figur 1 gleichartig aufgebauten) Halbleiterschaltmodulen 9. Auf den Aufbau der Halbleiterschaltmodule 9 wird in der nachfolgenden Figur 3 näher eingegangen. Aus Gründen der Übersichtlichkeit sind in Figur 1 lediglich drei Halbleiterschaltmodule 9 in jedem Umrichterarm 2a-2f dargestellt, deren Anzahl aber grundsätzlich beliebig und an die jeweilige Anwendung angepasst sein kann. Eine Anwendung der Umrichterarme in einer Dreieckschaltung ist alternativ ebenfalls möglich.

Die Speicheranordnung 6 umfasst mehrere parallelgeschaltete Reihenschaltungen 6R1-6Rn von im dargestellten Beispiel gleichartig aufgebauten Speichermodulen 10, wobei aus Gründen der Übersichtlichkeit lediglich drei Reihenschaltungen 6R1, 6Rn-1 und 6Rn grafisch dargestellt sind.

Um Wiederholungen zu vermeiden wird im Folgenden auf den Aufbau der ersten Reihenschaltung 6R1 näher eingegangen. Die übrigen Reihenschaltungen 6R2-6Rn sind gleichartig zur ersten Reihenschaltung 6R1 aufgebaut.

Die Speichermodule 10 der ersten Reihenschaltung 6R1 sind zu Speichereinheiten 11E1-m zusammengefasst wobei aus Gründen der Übersichtlichkeit lediglich drei Speichereinheiten 11E1, 11Em-1 und 11Em grafisch dargestellt sind. Jede Speichereinheit 11E1-m umfasst eine gewisse Anzahl der benachbarten Speichermodule. Die Anzahl der zu einer Speichereinheit zusammengefasster Speichermodule 10 ist grundsätzlich beliebig. Im vorliegenden Beispiel sind so viele Speichermodule zu einer jeweiligen Speichereinheit 11E1-m zusammengefasst, dass die an der jeweiligen Speichereinheit 11E1-m abfallende Spannung größer als 1 kVdc ist.

In einem Parallelzweig zu jeder Speichereinheit 11E1-m ist ein Schutzschalter 12S1-m geschaltet. Mittels des jeweils zugeordneten Schutzschalters 12S1-m kann die zugeordnete Speichereinheit 11E1-m im Fehlerfall überbrückt werden.

Die Umrichtereinheit 1 umfasst ferner eine Überwachungseinrichtung 15 mit Überwachungseinheiten 13M1-m sowie einer zentralen Steuerungseinheit 14

Zustandsmesswerte, wie Spannung, Strom, Temperatur oder Kapazität, aus den Speichermodulen 10 werden an eine der Speichereinheit 11E1-m jeweils zugeordnete Überwachungseinheit 13M1-m übermittelt. Die Überwachungseinheiten 13M1-m leiten die Zustandsmesswerte, unbearbeitet oder in geeigneter Weise bearbeitet, an die zentrale Steuerungseinheit 14. Die Steuerungseinheit 14 wertet die an sie übermittelten Signale. In Abhängigkeit von den Zustandsmesswerten kann die Steuerungseinheit 14 entscheiden, ob ein Fehlerfall vorliegt. Sie kann zudem einen möglichen Fehler der fehlerhaften Steuereinheit 11E1-m zuordnen. In einem solchen Fall wird der Schutzschalter 12S1-m mittels der Steuerungseinheit 14, der der fehlerhaften Speichereinheit 11E1-m zugeordnet ist aktiviert und die zugeordnete Speichereinheit 11E1-m überbrückt. Durch die Überbrückung der fehlerhaften Speichereinheit 11E1-m ist ein Weiterbetrieb der Speicheranordnung 6 bzw. der Umrichteranordnung 1 möglich.

In Figur 2 ist ein Beispiel einer Speichereinheit 20 für eine erfindungsgemäße Umrichteranordnung dargestellt. Die Speichereinheit 20 umfasst eine Mehrzahl von Speichermodulen 21-30, die in einer Reihenschaltung miteinander verbunden sind. Die Speichereinheit 10 verfügt über zwei Anschlüsse 31, 32. Mittels der beiden Anschlüsse 31,32 kann die Speichereinheit 20 in eine Reihenschaltung mit weiteren Speichereinheiten eingefügt werden. Die Speichereinheit 20 umfasst ferner eine Tragestruktur 33, in der die Speichermodule 21-30 angeordnet sind. Die Tragestruktur 33 ist gegenüber einem Erdpotenzial elektrisch isoliert.

In einer Parallelschaltung zu den beiden Anschlüssen 31,32 ist ein Schutzschalter 34 angeordnet. Der Schutzschalter 34 wird von der Tragestruktur 33 getragen. Mittels des Schutzschalters 34 kann die Speichereinheit 20 elektrisch überbrückt werden.

Ein Beispiel eines Halbleiterschaltmoduls 9 in Form einer Vollbrückenmodulschaltung 101 ist in Figur 3 schematisch dargestellt. Die Vollbrückenmodulschaltung 101 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenmodulschaltung 101 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Zwischenkondensator 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Zwischenkondensator 106 abfallenden Spannung Uc, der am Zwischenkondensator 106 abfallenden Spannung jedoch mit entgegengesetzter Polarität (-Uc) oder der Spannung null entspricht.

Eine Ausführung des Halbleiterschaltmoduls in einer dem Fachmann bekannten Halbbrückenschaltung ist ebenfalls möglich. Im Allgemeinen kann ein Umrichterarm sowohl Halbleiterschaltmodule in Vollbrücken als auch Halbleiterschaltmodule in Halbbrückenschaltung aufweisen.

## Patentansprüche

1. Umrichteranordnung (1) mit
- einem Umrichter (2) mit einer Wechselspannungsseite (3) zum Verbinden mit einem Wechselspannungsnetz (4) sowie einer Gleichspannungsseite (5),
- einer Speicheranordnung (5), die mit der Gleichspannungsseite (5) des Umrichters (2) verbindbar ist, wobei die Speicheranordnung (6) eine Mehrzahl elektrisch in Reihe miteinander verbundener Speichermodule (10) umfasst,
**dadurch gekennzeichnet, dass** eine vorgegebene Anzahl benachbarter Speichermodule (10) eine Speichereinheit (11E1-m) bildet, wobei in einer Parallelschaltung zur Speichereinheit (11E1-m) ein Schutzschalter (12S1-m) vorgesehen ist, mittels dessen die Speichereinheit (11E1-m) im Fehlerfall überbrückbar ist.

2. Umrichteranordnung (1) nach Anspruch 1, wobei der Schutzschalter (12S1-m) auf eine Spannung von mindestens 1 kVdc ausgelegt ist.

3. Umrichteranordnung (1) nach einem der vorangehenden Ansprüche, wobei der Schutzschalter (12S1-m) ein leistungselektronischer Schalter, ein mechanischer Gleichspannungsleistungsschalter oder ein Hybridschalter ist.

4. Umrichteranordnung (1) nach einem der vorangehenden Ansprüche, wobei eine Überwachungseinrichtung (15) zur Überwachung der Speichereinheit (11E1-m) vorgesehen ist, wobei die Überwachungseinrichtung (15) eine Steuerungseinheit (14) umfasst, die Speichermodule (10) dazu eingerichtet sind, den Speichermodulen (10) der Speichereinheit (11E1-m) zugeordnete Zustandsmesswerte zu erzeugen und an die Steuerungseinheit (14) zu übermitteln, und die Steuerungseinheit (14) dazu eingerichtet ist, unter Verwendung der Zustandsmesswerte ein Vorliegen einer vorbestimmten Fehlerbedingung zu erkennen und den Schutzschalter (12S1-m) derart anzusteuern, dass mittels des Schutzschalters (12S1-m) die Speichereinheit (11E1-m) überbrückt wird.

5. Umrichteranordnung (1) nach einem der Ansprüche 1 bis 3, wobei eine Überwachungseinrichtung (15) zur Überwachung der Speichereinheit (11E1-m) vorgesehen ist, wobei die Überwachungseinrichtung (15) eine Steuerungseinheit (14) umfasst, die Überwachungseinrichtung (15) ferner wenigstens eine Überwachungseinheit (13M1-m) umfasst, die dazu eingerichtet ist, an den Speichermodulen (10) der Speichereinheit (11E1-m) erzeugte Zustandsmesswerte an die Steuerungseinheit (14) zu übermitteln, und die Steuerungseinheit (14) dazu eingerichtet ist, unter Verwendung der Zustandsmesswerte ein Vorliegen einer vorbestimmten Fehlerbedingung zu erkennen und den Schutzschalter (12S1-m) derart anzusteuern, dass mittels des Schutzschalters (12S1-m) die Speichereinheit (11E1-m) überbrückt wird.

6. Umrichteranordnung (1) nach einem der vorangehenden Ansprüche, wobei der Umrichter (2) eine Mehrzahl von Umrichterarmen (2a-f) aufweist, die jeweils eine Reihenschaltung von Halbleiterschaltmodulen (9) aufweisen, und wobei die Halbleiterschaltmodule (9) Zwischenkondensatoren (106) umfassen.

7. Umrichteranordnung (1) nach einem der vorangehenden Ansprüche, wobei die Halbleiterschaltmodule (9) jeweils Halbleiterschalter (102,104,109,111) sowie einen Zwischenkondensator (106) umfassen, die miteinander in einer Vollbrückenmodulschaltung (101) verbunden sind.

8. Umrichteranordnung (1) nach einem der vorangehenden Ansprüche, wobei die Umrichteranordnung (1) dazu eingerichtet ist, durch geeignete Ansteuerung der Halbleiterschaltmodule (9) mittels einer Umrichterregelung eine Wirkleistung zwischen der Speicheranordnung (6) und einem an die Umrichteranordnung (1) wechselspannungsseitig angeschlossenen Wechselspannungsnetz (4) auszutauschen.

9. Umrichteranordnung (1) nach einem der vorangehenden Ansprüche, wobei die Umrichteranordnung (1) dazu eingerichtet ist, durch geeignete Ansteuerung der Halbleiterschaltmodule (9) mittels einer Umrichterregelung eine Blindleistung zwischen den Halbleiterschaltmodulen (9) und einem an die Umrichteranordnung (1) wechselspannungsseitig angeschlossenen Wechselspannungsnetz (4) auszutauschen.

10. Umrichteranordnung (1) nach einem der vorangehenden Ansprüche, wobei die Umrichterarme (2a-f) des Umrichters (2) in einer Doppelsternanordnung miteinander verbunden sind.

11. Umrichteranordnung (1) nach einem der vorangehenden Ansprüche, wobei an der Speichereinheit (11E1-m) eine Gleichspannung von mehr als 1 kV erzeugbar ist.
